# EUROPEAN PATENT APPLICATION

(11) **EP 4 782 952 A1**
(43) Date of publication of application: **29.07.2026**
(21) Application number: 25222049.6
(22) Date of filing: 10.12.2025
(51) Int. Cl.: G05D 1/646, A01B 69/04

(54) **AUTOMATED TRAVELING METHOD, AUTOMATED TRAVELING SYSTEM, AND PROGRAM**

(30) Priority: 22.01.2025 JP 2025009346
(71) Applicant: Yanmar Holdings Co., Ltd., Osaka-shi, Osaka (JP)
(72) Inventor: KODAMA, Maroi, Okayama (JP); SUZUKI, Shogo, Okayama (JP); ISHIDA, Tomoki, Okayama (JP)
(74) Representative: Isarpatent

(57) **Abstract**

[Problem] Provided is a technique that is capable of efficiently conducting work by using a working vehicle that performs automated traveling.

[Solution] An exemplary automated traveling method is an automated traveling method of a working vehicle, the automated traveling method including: generating a plurality of traveling routes along which the working vehicle is caused to perform automated traveling; configuring, on each of the plurality of traveling routes, a turning start position where turning is started toward a next traveling route; receiving an advance reservation for a turning direction in the turning start position; and causing the working vehicle to automatically turn in the turning direction for which the advance reservation has been made, when the working vehicle that performs the automated traveling along each of the plurality of traveling routes has reached the turning start position.

## Description

### TECHNICAL FIELD

The present invention relates to an automated traveling method, an automated traveling system, and a program.

### BACKGROUND ART

Conventionally, an autonomous traveling system that causes a working vehicle to autonomously travel in a field has been known (see, for example, Patent Document 1). Patent Document 1 discloses that, on condition that an operator has issued a forward movement instruction to a stopped working vehicle, at least steering is autonomously performed to cause the working vehicle to turn toward a straight route designated in advance without causing the working vehicle to conduct work.

### PRIOR ART DOCUMENT

### PATENT DOCUMENT

Patent Document 1: JP-A-2020-137463

### SUMMARY OF INVENTION

### TECHNICAL PROBLEM

In the configuration disclosed in Patent Document 1, it is necessary to temporarily stop the working vehicle in a turning start position. Therefore, there is a possibility that the efficiency of work conducted by the working vehicle will be reduced.

In view of the point described above, an object of the present invention is to provide a technique that is capable of efficiently conducting work by using a working vehicle that performs automated traveling.

### SOLUTION TO PROBLEM

An exemplary automated traveling method of the present invention is an automated traveling method of a working vehicle, the automated traveling method including: generating a plurality of traveling routes along which the working vehicle is caused to perform automated traveling; configuring, on each of the plurality of traveling routes, a turning start position where turning is started toward a next traveling route; receiving an advance reservation for a turning direction in the turning start position; and causing the working vehicle to automatically turn in the turning direction for which the advance reservation has been made, when the working vehicle that performs the automated traveling along each of the plurality of traveling routes has reached the turning start position.

An exemplary automated traveling system of the present invention includes: a working vehicle; an operation device that is provided to enable the working vehicle to be configured with respect to automated traveling; and a control device that controls the automated traveling of the working vehicle in response to an instruction from the operation device, and the control device performs: generating a plurality of traveling routes along which the working vehicle is caused to perform the automated traveling; configuring, on each of the plurality of traveling routes, a turning start position where turning is started toward a next traveling route; receiving an advance reservation for a turning direction in the turning start position, the advance reservation having been made by using the operation device; and causing the working vehicle to automatically turn in the turning direction for which the advance reservation has been made, when the working vehicle that performs the automated traveling along each of the plurality of traveling routes has reached the turning start position.

An exemplary program of the present invention is a program that causes a computer to perform an automated traveling method of a working vehicle, in which the program causes the computer to perform: generating a plurality of traveling routes along which the working vehicle is caused to perform automated traveling; configuring, on each of the plurality of traveling routes, a turning start position where turning is started toward a next traveling route; receiving an advance reservation for a turning direction in the turning start position; and causing the working vehicle to automatically turn in the turning direction for which the advance reservation has been made, when the working vehicle that performs the automated traveling along each of the plurality of traveling routes has reached the turning start position.

### ADVANTAGEOUS EFFECTS OF INVENTION

According to the exemplary present invention, it is possible to efficiently conduct work by using a working vehicle that performs automated traveling.

### BRIEF DESCRIPTION OF DRAWINGS

Fig. 1 is a diagram illustrating a schematic configuration of an automated traveling system;
Fig. 2 is a plan view illustrating a schematic configuration of an operation device;
Fig. 3 is a block diagram illustrating a schematic configuration of a working vehicle;
Fig. 4 is a diagram for explaining a method of generating a straight route along which the working vehicle is caused to perform automated traveling;
Fig. 5 is a diagram for explaining an outline of automated traveling performed by the automated traveling system;
Fig. 6 is a diagram for explaining updating of an end point that determines a work section;
Fig. 7A is a schematic diagram illustrating a relationship between an operation position of a second operation switch and a turning route;
Fig. 7B is a schematic diagram illustrating the relationship between the operation position of the second operation switch and the turning route;
Fig. 7C is a schematic diagram illustrating the relationship between the operation position of the second operation switch and the turning route;
Fig. 8A is a diagram for explaining a pattern of the turning route;
Fig. 8B is another diagram for explaining the pattern of the turning route;
Fig. 9 is a flowchart illustrating a flow of an automated traveling method; and
Fig. 10 is a diagram illustrating a specific example of a situation where a change operation is performed to reverse a turning direction configured in an advance reservation.

### DESCRIPTION OF EMBODIMENTS

An embodiment of the present invention will be described with reference to the drawings. Note that, in the drawings, the same or equivalent elements are denoted by the same reference signs, and the description thereof will not be repeated in a case where there is no particular need for description.

### <1. Outline of automated traveling system>

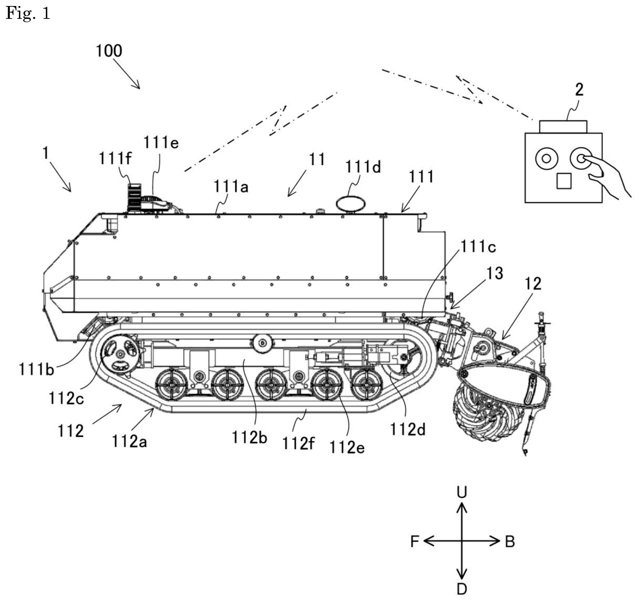

Fig. 1 is a diagram illustrating a schematic configuration of an automated traveling system 100 according to the embodiment of the present invention. As illustrated in Fig. 1, the automated traveling system 100 includes a working vehicle 1 and an operation device 2. A diagram of the working vehicle 1 included in Fig. 1 is a side view.

Herein, automated traveling means that a device relating to traveling is controlled by a control device included in the working vehicle 1 such that at least steering is autonomously performed. Automated traveling may be configured, for example, such that at least one of the adjustment of vehicle speed and an operation performed on a working machine is autonomously performed in addition to steering. In exemplary automated traveling according to the present embodiment, steering is autonomously performed, and the adjustment of vehicle speed and an operation performed on the working machine are manually performed in principle.

### [1-1. Working vehicle]

The working vehicle 1 is used to conduct work such as farm work or construction work. As illustrated in Fig. 1, the working vehicle 1 includes a traveling machine body 11 that travels on the ground, and a working machine 12 that is coupled to the traveling machine body 11.

Here, for convenience of the following description, directions are defined as follows. It is assumed that a direction in which the traveling machine body 11 and the working machine 12 are arranged is a forward/backward direction, and the working machine 12 is located at the rear, when viewed from the traveling machine body 11. A leftward/rightward direction is defined in such a way that, when viewed from the rear to the front, a side on the left is a left side, and a side on the right is a right side. Moreover, it is assumed that a gravity direction that is perpendicular to the forward/backward direction and the leftward/rightward direction is an upward/downward direction, an upstream side in the gravity direction is an upper side, and a downstream side in the gravity direction is a lower side. In the drawings, as necessary, a front side is denoted by "F", a rear side is denoted by "B", the right side is denoted by "R", the left side is denoted by "L", the upper side is denoted by "U", and the lower side is denoted by "D".

In the present embodiment, the working machine 12 is disposed at the rear of the traveling machine body 11, but the present invention is also applicable to a working vehicle in which the working machine is disposed in front of the traveling machine body.

The traveling machine body 11 includes a machine main body 111, and a traveling unit 112 that is disposed on the lower side of the machine main body 111.

The machine main body 111 includes an outer cover 111a, a traveling driving device 111b that is disposed on an inner front side covered with the outer cover 111a, and a working machine driving device 111c that is disposed on an inner rear side covered with the outer cover 111a.

The traveling driving device 111b includes a driving source, and a power transmission mechanism that transmits power from the driving source to the traveling unit 112. In the present embodiment, the driving source included in the traveling driving device 111b is an electric motor. However, the driving source included in the traveling driving device 111b does not necessarily need to be the electric motor, and may be, for example, an engine.

The working machine driving device 111c includes a driving source, and a power take off (PTO) power transmission unit that enables power from the driving source to be transmitted to the outside of the traveling machine body 11. In the present embodiment, the driving source included in the working machine driving device 111c is an electric motor. Note that the electric motor included in the working machine driving device 111c and the electric motor included in the traveling driving device 111b are separate motors. Furthermore, the driving source included in the working machine driving device 111c does not necessarily need to be the electric motor, and may be, for example, an engine. In addition, the traveling driving device 111b and the working machine driving device 111c may share a driving source.

Inside the outer cover 111a, a battery that supplies electric power to the electric motor, a power electronics device, or the like is also disposed. Outside the outer cover 111a, as an example, a light 111d, a positioning antenna 111e, an alarm lamp 111f, and the like are disposed.

In the present embodiment, no driver's seat for an operator is disposed in the traveling machine body 11, and stated another way, the working vehicle 1 travels in an unmanned manner. However, the present invention is also applicable to a working vehicle including a driver's seat in the traveling machine body 11. Stated another way, the traveling machine body 11 may include a driver's seat and an instrument (a steering wheel, a lever, or the like) used for an operator on the driver's seat to steer the working vehicle.

The traveling unit 112 supports the machine main body 111 in a travelable manner. Specifically, the traveling unit 112 includes a pair of left and right crawlers 112a. Each of the left and right crawlers 112a includes a track frame 112b that extends in the forward/backward direction. Each of the track frames 112b is attached to a lower portion of the machine main body 111. At a front end of the track frame 112b, a driving sprocket 112c is disposed as a driving wheel. Power from the electric motor is transmitted to the driving sprocket 112c via the power transmission mechanism included in the traveling driving device 111b. At a rear end of the track frame 112b, an idler 112d is disposed as a driven wheel. The idler 112d is rotatably supported by the track frame 112b. Between the driving sprocket 112c and the idler 112d of the track frame 112b, a plurality of track rollers 112e is rotatably supported. A crawler belt 112f is wound around the driving sprocket 112c, the idler 112d, and the plurality of track rollers 112e to form the crawler 112a.

In the present embodiment, the respective left and right crawlers 112a are driven by separate electric motors included in the traveling driving device 111b. For example, when the pair of left and right crawlers 112a have been simultaneously driven in the same direction, the traveling unit 112 travels straight forward or backward. Whether the traveling unit 112 travels forward or backward is determined according to a rotation direction of the electric motors. Furthermore, the traveling unit 112 performs left turning or right turning, for example, by independently driving the pair of left and right crawlers 112a.

In the present embodiment, the crawler 112a has a configuration in which one driving wheel (the driving sprocket 112c) and one driven wheel (the idler 112d) are arranged in the forward/backward direction and the crawler belt 112f is wound therearound, but the crawler 112a may have another configuration. For example, the crawler may be of a type in which a crawler belt is wound around one driving wheel and two driven wheels in a triangular shape. Furthermore, in the present embodiment, the traveling unit 112 is of a crawler type, but the traveling unit may be of a type other than the crawler type, and may be of a wheel type, for example.

The working machine 12 is attached to the traveling machine body 11 to be able to be elevated or lowered, by using a hitch 13. Note that the hitch 13 includes the working machine driving device 111c described above. The working machine 12 is attached to the hitch 13 in a replaceable manner. Stated another way, the working machine 12 can be replaced with various types of working machines. In Fig. 1, the working machine 12 is a tiller. In addition to the tiller, the working machine 12 may be, for example, a plow, a fertilizing device, an agrochemical spreading device, a harvesting device, a reaping device, a snow removing device, an earth removing device, or the like. Note that, in the present embodiment, the working machine 12 is provided to be able to be elevated or lowered, but the working machine 12 does not necessarily need to be able to be elevated or lowered.

A configuration of the working vehicle 1 included in the automated traveling system 100 is not limited to the configuration described above, and any configuration including a traveling machine body and a working machine may be employed. The working machine included in the working vehicle may be disposed, for example, in front of the traveling machine body in contrast to being disposed behind the traveling machine body, as described above. The working vehicle 1 may be, for example, a tractor, a rice transplanter, a combine harvester, a harvester that harvests various crops, a snow remover, various civil engineering and construction working machines, or the like.

### [1-2. Operation device]

The operation device 2 is a remote operation device that enables an operator present in a position away from the working vehicle 1 to operate the working vehicle 1. The operation device 2 is provided to be able to perform a configuration relating to manual traveling of the working vehicle 1. The operation device 2 is also provided to be able to perform a configuration relating to automated traveling of the working vehicle 1. Note that, in the present embodiment, the operation device 2 is a remote operation device that is provided separately from the working vehicle 1, but this is an example. The operation device of the present invention may be provided in the working vehicle itself. In a case where the operation device is provided in the working vehicle, for example, shapes, disposition, types, and the like of the operation members described below may be appropriately changed.

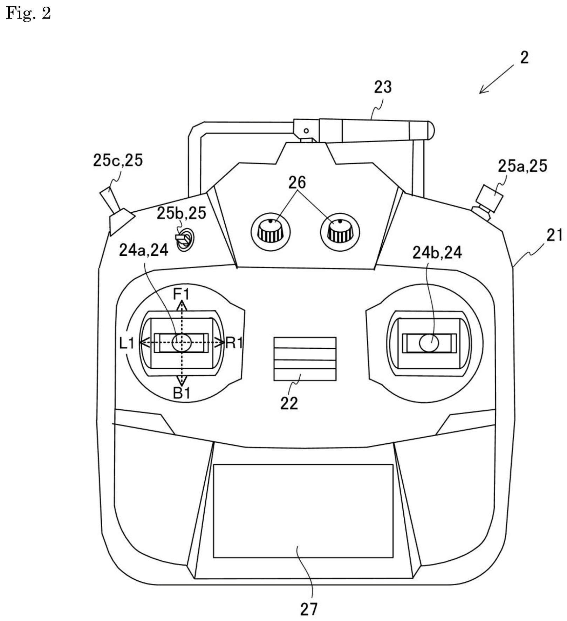

Fig. 2 is a plan view illustrating a schematic configuration of the operation device 2 according to the embodiment of the present invention. As illustrated in Fig. 2, the operation device 2 includes a housing 21, a power switch 22, an antenna 23, an operation lever 24, an operation switch 25, an operation knob 26, and a display 27.

The housing 21 constitutes a main body portion of the operation device 2. The power switch 22, the antenna 23, the operation lever 24, the operation switch 25, the operation knob 26, and the display 27 that have been described above are respectively disposed in appropriate positions of the housing 21. Note that the disposition illustrated in Fig. 2 is merely an example, and may be appropriately changed.

The power switch 22 is provided at the center of a front face of the housing 21, and can switch the operation device 2 between a power-on state and a power-off state. The power switch 22 is, for example, a seesaw switch. Note that a power source of the operation device 2 is, for example, a battery or a dry cell that is disposed in the housing 21.

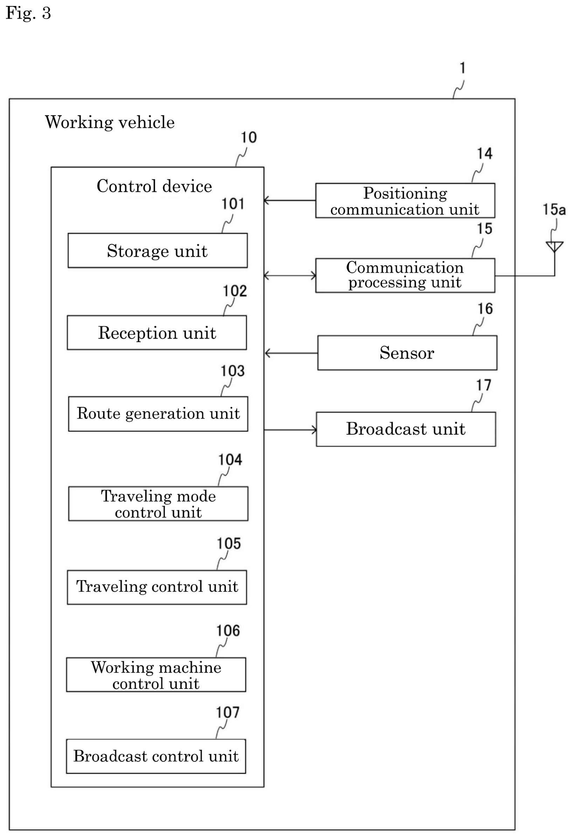

The antenna 23 is provided to protrude from a side face (an upper side face in the example illustrated in Fig. 2) of the housing 21, and enables wireless communication with the working vehicle 1. In other words, the working vehicle 1 is provided with an antenna 15a (see Fig. 3 described later) for performing wireless communication with the operation device 2. In a case where the power switch 22 has brought the operation device 2 into the power-on state, the operation device 2 can perform wireless communication with the working vehicle 1. In a case where the power switch 22 has brought the operation device 2 into the power-off state, the operation device 2 fails to communicate with the working vehicle 1. In the present embodiment, when the working vehicle 1 during traveling has failed to communicate with the operation device 2, the working vehicle 1 automatically stops traveling. Stated another way, the power switch 22 has a function as an emergency stop switch of the working vehicle 1. Note that the emergency stop switch may be provided separately from the power switch 22.

The operation lever 24 enables a traveling operation to be performed on the working vehicle 1, and enables an operation to be performed on the working machine 12. In the present embodiment, the operation lever 24 includes a first operation lever 24a and a second operation lever 24b that are disposed side by side to sandwich the power switch 22. The first operation lever 24a (a left side lever in the example illustrated in Fig. 2) can be tilted in two directions (direction F1-B1 and direction L1-R1) that are illustrated as broken line arrows in Fig. 2 and are orthogonal to each other. In addition, the first operation lever 24a can be tilted to any one side in direction L1-R1 while being tilted to any one side in direction F1-B1. Note that the second operation lever 24b (a right side lever in the example illustrated in Fig. 2) can also be tilted in directions similar to those of the first operation lever 24a. Furthermore, the functions of the first operation lever 24a and the second operation lever 24b may be exchanged with each other.

In the present embodiment, the first operation lever 24a and the second operation lever 24b exhibit functions that are different depending on whether the working vehicle 1 is in a manual traveling mode or an automated traveling mode.

For example, in the manual traveling mode, when the first operation lever 24a has been tilted in direction F1, the working vehicle 1 can be moved forward. In the manual traveling mode, when the first operation lever 24a has been tilted in direction B1, the working vehicle 1 can be moved backward. In the manual traveling mode, when the first operation lever 24a has been tilted in direction L1, the working vehicle 1 can be turned to the left. In the manual traveling mode, when the first operation lever 24a has been tilted in direction R1, the working vehicle 1 can be turned to the right. In addition, in the manual traveling mode, the working machine 12 can be raised or lowered by operating the second operation lever 24b.

In the automated traveling mode, the first operation lever 24a and the second operation lever 24b exhibit functions of performing a configuration relating to automated traveling. This point will be described later in detail. In the description below, for convenience of description, tilting the first operation lever 24a in direction F1 is expressed as tilting the first operation lever 24a in a forward movement direction F1. Tilting the first operation lever 24a in direction B1 is expressed as tilting the first operation lever 24a in a backward movement direction B1. Tilting the first operation lever 24a in direction L1 is expressed as tilting the first operation lever 24a in a left-turning direction L1. Furthermore, tilting the first operation lever 24a in direction R1 is expressed as tilting the first operation lever 24a in a right-turning direction R1.

The operation switch 25 enables various configurations relating to the working vehicle 1. In the present embodiment, the operation switch 25 includes three operation switches 25a to 25c that are disposed on the front face or the side face of the housing 21. A first operation switch 25a (disposed on an upper right side face in the example illustrated in Fig. 2) is constituted by a momentary switch, and enables plural types of configurations relating to automated traveling. This will be described later in detail. A second operation switch 25b is constituted by a three-position toggle switch, and enables a configuration relating to automated turning. This will be described later in detail. A third operation switch 25c (disposed on an upper left front face in the example illustrated in Fig. 2) is constituted by a toggle switch, and is provided to be switchable between a state where power can be transmitted to the working machine 12 by using the PTO power transmission unit described above and a state where power fails to be transmitted to the working machine 12 by using the PTO power transmission unit.

Note that the types of the respective operation switches 25a to 25c described above are merely examples. The types of the respective operation switches 25a to 25c may be appropriately changed.

The operation knob 26 is disposed on the front face (in an upper side portion of the front face in the example illustrated in Fig. 2) of the housing 21, and enables adjustment of the maximum speed (an upper limit value of speed) of the working vehicle 1. Specifically, two operation knobs 26 are provided. One of the two operation knobs 26 enables adjustment of the maximum speed of the working vehicle 1 during straight traveling. Another of the two operation knobs 26 enables adjustment of the maximum speed of the working vehicle 1 during turning traveling.

The display 27 is disposed on the front face (in a lower side portion of the front face in the example illustrated in Fig. 2) of the housing 21, and displays various types of information to be reported to an operator. The various types of information include, for example, a display of a positional relationship between a traveling route and the working vehicle 1 during automated traveling. The display 27 is constituted by, for example, a liquid crystal display device, an organic EL display device, or the like. Note that the display 27 may be omitted.

### <2. Configuration relating to automated traveling of working vehicle>

Next, details of a configuration relating to automated traveling of the working vehicle 1 according to the present embodiment will be described. Fig. 3 is a block diagram illustrating a schematic configuration of the working vehicle 1 according to the embodiment of the present invention. In Fig. 3, components necessary for describing a characteristic configuration (principally, a configuration relating to automated traveling) of the working vehicle 1 according to the present embodiment are illustrated, and general components are omitted.

As illustrated in Fig. 3, the working vehicle 1 includes a control device 10. Stated another way, the automated traveling system 100 includes the control device 10. For example, the control device 10 controls the automated traveling of the working vehicle 1 in response to an instruction from the operation device 2.

The control device 10 is, for example, a computer device including an arithmetic device, an input/output unit, and a storage unit 101. The arithmetic device includes, for example, a processor or a microprocessor. The storage unit 101 is a principal storage device such as a read only memory (ROM) and a random access memory (RAM). The storage unit 101 may further include an auxiliary storage device such as a hard disk drive (HDD) or a solid state drive (SSD). The storage unit 101 stores various types of programs, data, and the like. The arithmetic device reads various types of programs from the storage unit 101 and performs arithmetic processing according to the programs to exhibit various functions. The programs stored in the storage unit 101 may be provided by, for example, a computer-readable nonvolatile recording medium. As another example, the programs may be provided from a program providing server via a communication line such as the Internet.

The control device 10 can operate as a reception unit 102, a route generation unit 103, a traveling mode control unit 104, a traveling control unit 105, a working machine control unit 106, and a broadcast control unit 107 in cooperation with the hardware and software described above. The control device 10 may include one piece of hardware or may include plural pieces of hardware capable of communicating with each other. Some functions of the control device 10 may be included in the operation device 2.

Note that each of the functional units 102 to 107 included in the control device 10 may be implemented by causing the arithmetic device to perform arithmetic processing according to a program as described above, that is, by software, but may be implemented by using another method. At least any one of the functional units 102 to 107 may be implemented by using, for example, an application specific integrated circuit (ASIC), a field programmable gate array (FPGA), or the like. Stated another way, at least any one of the functional units 102 to 107 may be implemented by hardware, by using a dedicated IC or the like. In addition, at least any one of the functional units 102 to 107 may be implemented by using software and hardware in combination. Furthermore, each of the functional units 102 to 107 is a conceptual component. A function performed by one component may be distributed to a plurality of components. Moreover, functions of a plurality of components may be integrated into one component.

The control device 10 is connected to a positioning communication unit 14, a communication processing unit 15, a sensor 16, and a broadcast unit 17. Stated another way, the working vehicle 1 includes the positioning communication unit 14, the communication processing unit 15, the sensor 16, and the broadcast unit 17.

The positioning communication unit 14 includes a positioning antenna 111e (see Fig. 1), and acquires a position of the working vehicle 1, for example, as information relating to latitude and longitude, by using a positioning signal received by the positioning antenna 111e from a positioning satellite. The positioning communication unit 14 outputs positional information of the working vehicle 1 to the control device 10. The positioning communication unit 14 receives, for example, a positioning signal from a not-illustrated reference station by using an appropriate method, and performs positioning by using publicly known real time kinematic GNSS (RTK-GNSS). Note that the positioning communication unit 14 may perform positioning by using another method such as differential GNSS (DGNSS).

The communication processing unit 15 performs communication with the operation device 2 via the communication antenna 15a. Note that the communication antenna 15a is an antenna that is used to perform wireless communication with the operation device 2. In wireless communication, for example, a wireless local area network (LAN), such as Wi-Fi (registered trademark), may be used.

The sensor 16 detects information relating to the working vehicle 1, and outputs the detected information to the control device 10. In the present embodiment, the sensor 16 includes plural types of sensors. Each of the plural types of sensors is connected to the control device 10 to be capable of inputting a signal. Examples of the plural types of sensors include an inertial measurement unit (IMU), an obstacle sensor, a vehicle speed sensor, and an elevated/lowered position sensor.

The inertial measurement device is a device that includes a triaxial angular velocity sensor and a triaxial acceleration sensor and is capable of measuring an orientation of the working vehicle 1. The obstacle sensor is a sensor that detects an obstacle around the working vehicle 1, and may be, for example, an ultrasonic sensor, a camera, a radar, a light detection and ranging (LiDAR), or the like. The vehicle speed sensor is a sensor that detects the speed of the working vehicle 1. The elevated/lowered position sensor is a sensor that detects an elevated/lowered position of the working machine 12 that is provided to be able to be elevated and lowered.

The broadcast unit 17 is provided as a unit that broadcasts information from the working vehicle 1 to the outside. The broadcast unit 17 does not necessarily need to include one device, and may include a plurality of devices. The broadcast unit 17 may be, for example, a sound output device that outputs sound, a light emitting device that emits light, a display device that displays information, or the like. Specifically, the broadcast unit 17 may include at least one of a speaker, a buzzer, a light, a monitor, and the like.

The reception unit 102 included in the control device 10 receives an instruction that has been issued by an operator by using the operation device 2. The instruction issued by using the operation device 2 includes an instruction relating to automated traveling. Note that an instruction to be received by the reception unit 102 may also include an instruction relating to manual traveling, such as a traveling instruction at the time of manual traveling.

The route generation unit 103 generates a plurality of traveling routes along which the working vehicle 1 is caused to perform automated traveling. In the present embodiment, the plurality of traveling routes here is working routes along which work using the working machine 12 is conducted. Each of the plurality of traveling routes is a straight route, and a plurality of straight routes is disposed in parallel to each other. A straight route along which the working vehicle 1 is caused to perform automated traveling (a route for automated traveling work) is generated, for example, as follows.

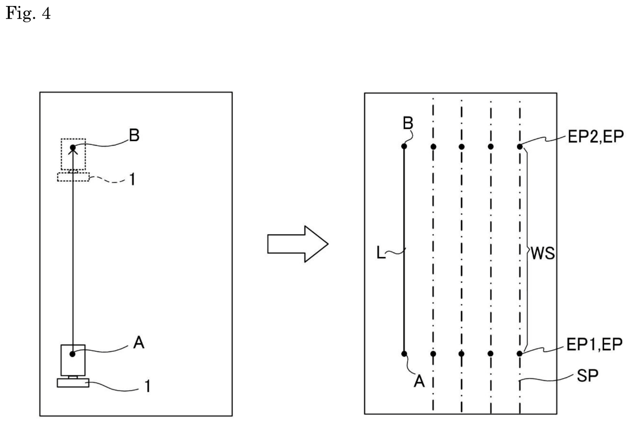

Fig. 4 is a diagram for explaining a method of generating a straight route SP along which the working vehicle 1 is caused to perform automated traveling. In generating a straight route serving as a route for automated traveling work, first, a reference line L is configured. Note that the method described here of configuring the reference line L is merely an example, and the reference line L may be generated by using another method.

In configuring the reference line L, first, the working vehicle 1 is moved to an appropriate position (point A in the drawing) of a work target place (in the present embodiment, a field) by using manual traveling, and point A is registered by using the operation device 2. In the present embodiment, in moving the working vehicle 1 by using manual traveling, the first operation lever 24a (see Fig. 2) of the operation device 2 is used. Furthermore, in registering point A by using the operation device 2, the first operation switch 25a (see Fig. 2) is used. The reception unit 102 receives the registration of point A according to an operation performed on the first operation switch 25a. Then, the route generation unit 103 registers, as a position of point A, a position of the working vehicle 1 that has been obtained by the positioning communication unit 14 at a point in time when the registration of point A has been configured.

When point A has been registered, the operator uses the operation device 2 (specifically, the first operation lever 24a) to cause the working vehicle 1 to perform manual traveling to travel straight and move to a target position (point B in the drawing). Note that during straight traveling, the working vehicle 1 may conduct work using the working machine 12. When the working vehicle 1 has reached the target position (point B), point B is registered by using the operation device 2. In registering point B by using the operation device 2, the first operation switch 25a is used. Specifically, on the assumption that point A has already been registered, when an operation that is the same as an operation at the time of registering point A has been performed on the first operation switch 25a, the reception unit 102 receives the registration of point B. Then, the route generation unit 103 registers, as a position of point B, a position of the working vehicle 1 that has been obtained by the positioning communication unit 14 at a point in time when the registration of point B has been configured.

When the positions of point A and point B have been registered, a straight line passing through point A and point B is configured as the reference line L (a teaching route). In the present embodiment, the same switch (the first operation switch 25a) is used to register point A and point B, but this is merely an example. A switch for registering point A and a switch for registering point B may be separately provided in the operation device 2. Furthermore, the reference line may be, for example, a straight line that is parallel to the forward/backward direction of the working vehicle 1 (a local vehicle direction) at the time of registering point A and passes through point A. Alternatively, the reference line may be, for example, a straight line that passes through point A and is parallel to a configured direction. In the cases of the two methods of configuring the reference line that have been described above as modifications, point B does not need to be registered.

When the reference line L has been configured, the route generation unit 103 arranges a plurality of lines parallel to the reference line L at predetermined intervals (see dash-dotted lines in Fig. 4), and generates a plurality of straight routes SP for automated traveling work in the work target place (a field). In the present embodiment, the traveling route for the automated traveling work is a straight route, but may be a curved route.

When the route generation unit 103 has generated the plurality of straight routes SP, the route generation unit 103 configures, for each of the straight routes SP, a first end point EP1 and a second end point EP2 that determine a work section WS in which work using the working machine 12 will be conducted. A section between the first end point EP1 and the second end point EP2 is the work section WS. In each of the straight routes SP, one of the first end point EP1 and the second end point EP2 is a start position of work using the working machine 12. In each of the straight routes SP, another of the first end point EP1 and the second end point EP2 is a turning start position in which turning is started toward a straight route SP along which work using the working machine 12 will be conducted next. Note that the roles of the first end point EP1 and the second end point EP2 switch between the work start position and the turning start position for each of the straight routes SP.

In the present embodiment, the first end point EP1 and the second end point EP2 in each of the straight routes SP are configured on the basis of the positions described above of point A and point B. In the example illustrated in Fig. 4, as an example, the first end point EP1 is an intersection of a virtual line that is orthogonal to the reference line L and passes through point A and the straight route SP. In addition, the second end point EP2 is an intersection of a virtual line that is orthogonal to the reference line L and passes through point B and the straight route SP. In contrast, the first end point EP1 may be determined on the basis of point B, and the second end point EP2 may be determined on the basis of point A.

Note that a method of configuring the end points EP1 and EP2 is not limited to this method, and may be another method. For example, the virtual lines described above may obliquely intersect the reference line L instead of being orthogonal to the reference line L. In addition, in configuring the end points EP1 and EP2, an operator may be able to freely designate the positions of the end points EP1 and EP2. For example, the operator may configure the end points EP1 and EP2 by tapping arbitrary positions on a straight route SP displayed on a screen provided in the working vehicle 1, the operation device 2, or the like. In addition, the length of the work section WS may change for each of the straight routes SP, and accordingly, the method of configuring the end points EP1 and EP2 may change for each of the straight routes SP. Furthermore, the positions of the end points EP1 and EP2 may be able to be updated as appropriate. For example, the work section WS of each of the straight routes SP may be sequentially updated in accordance with a result of automated traveling work along a straight route SP along which the automated traveling work has been conducted most recently.

In addition, in the present embodiment, the route generation unit 103 also generates a turning route for a movement from a straight route SP along which the vehicle is currently traveling to a straight route SP along which work is to be conducted next. The turning route here widely includes a route along which the forward/backward direction of the working vehicle 1 can be reversed, and the turning route may include not only a route along which only turning is performed but also a route obtained by adding a straight route to a route along which turning is performed. A detailed example of the turning route will be described later.

The traveling mode control unit 104 performs control to switch between the manual traveling mode and the automated traveling mode. In the present embodiment, in the manual traveling mode, the operator uses the operation device 2 to perform operations relating to the traveling of the working vehicle 1 and an operation performed by the working machine 12. In the automated traveling mode, the working vehicle 1 is automatically steered, and the operator uses the operation device 2 to perform operations relating to the adjustment of the vehicle speed of the working vehicle 1 and an operation performed by the working machine 12.

The traveling mode control unit 104 switches a traveling mode, for example, in a case where the reception unit 102 has received an instruction to switch the traveling mode that has been issued by the operator by using the first operation switch 25a. Specifically, in a case where the working vehicle 1 is in the manual traveling mode, when the reception unit 102 has received an instruction to switch the traveling mode, the traveling mode control unit 104 performs switching from the manual traveling mode to the automated traveling mode. In a case where the working vehicle 1 is in the automated traveling mode, when the reception unit 102 has received an instruction to switch the traveling mode, the traveling mode control unit 104 performs switching from the automated traveling mode to the manual traveling mode.

In the present embodiment, the instruction to switch the traveling mode is an operation to press the first operation switch 25a once. As described above, the first operation switch 25a is also used at the time of issuing an instruction to register point A and point B, but in this case, in order to be distinguishable from the instruction to switch the traveling mode, pressing twice is used to press the first operation switch 25a twice in a row. Stated another way, before point A is registered, the first operation switch 25a is pressed twice to register point A, and after point A has been registered, the first operation switch 25a is pressed twice to register point B. However, these instruction operations are merely examples. For example, the first operation switch 25a may be pressed twice to issue the instruction to switch the traveling mode, and the first operation switch 25a may be pressed once to issue an instruction to register point A or point B. Furthermore, a switch for switching the traveling mode may be a switch that is different from a switch for issuing the instruction to register point A or point B.

The traveling control unit 105 controls a traveling system of the working vehicle 1 in accordance with the traveling mode. In a case where the traveling mode is the manual traveling mode, the traveling control unit 105 controls the traveling system of the working vehicle 1 in response to an instruction from the operation device 2. In a case where the traveling mode is the automated traveling mode, the traveling control unit 105 performs automated control on at least a portion of the traveling system of the working vehicle 1. In the present embodiment, the traveling control unit 105 performs automated steering control (automated steering), for example, in such a way that the working vehicle 1 travels along a predetermined route. At the time of automated steering control, a position or an orientation of the working vehicle 1 is obtained, for example, on the basis of information obtained from the positioning communication unit 14 and the inertial measurement device included in the sensor 16. Then, calculation relating to automated steering is performed according to a positional relationship between the obtained position or the like of the working vehicle 1 and the predetermined route for automated traveling (a route generated by the route generation unit 103), and steering control according to a calculation result is performed.

The working machine control unit 106 controls a working system of the working vehicle 1 in response to an instruction from the operation device 2. Control on the working system of the working vehicle 1 includes, for example, control to elevate/lower the working machine 12 and control on the working machine 12 to switch a power transmission state by using the PTO power transmission unit. Note that the working machine control unit 106 may be configured to switch control on the working system of the working vehicle 1 according to the traveling mode. Stated another way, in the case of the automated traveling mode, the working machine control unit 106 may be configured to perform automated control on an operation performed by the working machine 12. Whether automated control is performed on the working machine 12 in the case of the automated traveling mode may be selectable by the operator.

The broadcast control unit 107 controls the broadcast unit 17. The broadcast control unit 107 controls the broadcast unit 17 to perform a broadcast operation, for example, in a case where it is necessary to broadcast a status of receiving an instruction from the operation device 2 to a surrounding person such as an operator, in a case where it is necessary to give an advance notice of an operation performed by the working vehicle 1, or in a case where it is necessary to broadcast a state of the working vehicle 1. The broadcast operation is, for example, sound output, light emission, or display.

### <3. Automated traveling>

Next, automated traveling of the working vehicle 1 that is performed by the automated traveling system 100 of the present embodiment will be described.

### [3-1. Outline]

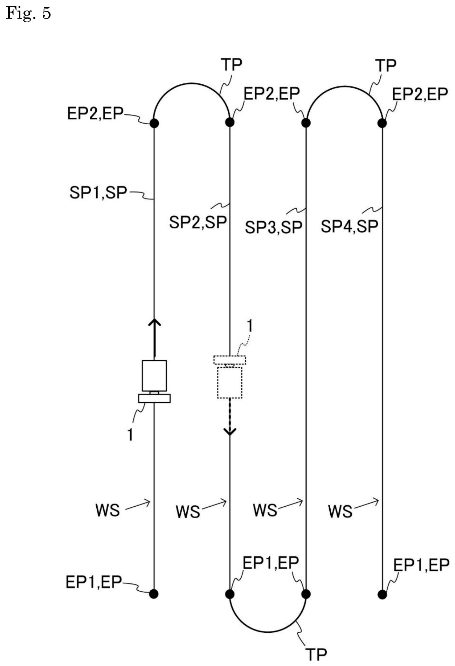

Fig. 5 is a diagram for explaining an outline of automated traveling performed by the automated traveling system 100. In Fig. 5, the generation of a straight route SP along which automated traveling is performed, the configuration of end points EP that determine the work section WS, and a transition to the automated traveling mode have been completed.

In Fig. 5, the working vehicle 1 is performing automated traveling (automated steering traveling) along a straight route SP1. At this time, an operator is tilting the first operation lever 24a of the operation device 2 in the forward movement direction F1 to issue a forward movement instruction. The traveling speed of the working vehicle 1 is adjusted according to an amount of tilting the first operation lever 24a in the forward movement direction F1.

Note that it is preferable that the operation device 2 have a function of issuing an instruction to maintain the speed configured by the operator of the working vehicle 1 (a speed fixing instruction function). By employing such a configuration, even if the operator has operated the first operation lever 24a to adjust the speed and then has released the first operation lever 24a, the working vehicle 1 can be caused to continue traveling at the speed configured by the operator. Stated another way, it is possible to reduce a burden on the operator when the working vehicle 1 performs automated traveling along the straight route SP. Note that the speed fixing instruction function may be obtained by using an existing lever or switch, or may be obtained by using an operation member such as a newly provided switch.

Furthermore, automated traveling along the straight route SP1 is started from one of the two end points EP1 and EP2 (in the example illustrated in Fig. 5, the end point EP1). Then, when automated traveling is started, the operator operates the second operation lever 24b of the operation device 2 to lower the working machine 12 so that the working machine 12 enters into a workable state. Therefore, the working vehicle 1 that performs automated traveling along the straight route SP1 (in the work section WS) conducts work using the working machine 12. As described above, an operation to change the workability of the working machine 12, such as elevating and lowering of the working machine 12, may be automatically performed. For example, the working machine 12 may be configured to enter into the workable state in conjunction with the operator reaching the end point EP1 and pressing the first operation switch 25a to start automated traveling.

When the working vehicle 1 that performs automated traveling while conducting work using the working machine 12 has reached an end point (in the example illustrated in Fig. 5, the end point EP2) that is opposite to an end point where work has been started (in the example illustrated in Fig. 5, the end point EP1), the working vehicle 1 starts turning in a direction that has been instructed by the operator by using the operation device 2. Turning is performed such that work can be conducted along the next straight route SP2, and a turning direction instructed by the operator is a direction toward a side where the straight route SP2 along which work will be conducted next is present. In the example illustrated in Fig. 5, the straight route SP2 along which work will be conducted next is present on a right side, and therefore the turning direction instructed by the operator is the rightward direction. Note that the work using the working machine 12 is not conducted during turning traveling, and therefore before the start of turning, the operator uses the second operation lever 24b to elevate the working machine 12 and bring the working machine 12 into an unworkable state. Note that an operation to bring the working machine 12 into the unworkable state may be automatically performed, and the working machine 12 may be automatically brought into the unworkable state, for example, by detecting arrival at an end point where turning will be started (in the example illustrated in Fig. 5, the end point EP2).

The working vehicle 1 that has started turning performs automated turning traveling (automated steering traveling) along a turning route TP generated by the route generation unit 103. Note that at the time of automated turning traveling, similarly to the case of automated traveling along the straight route SP, the operator operates the first operation lever 24a of the operation device 2 to adjust the traveling speed of the working vehicle 1. At the time of automated turning traveling, similarly, steering is automatically controlled.

When the working vehicle 1 has performed automated turning traveling to reach a start position (an end point EP2) of automated traveling work along the next straight route SP2, automated turning traveling along the turning route TP is completed, and automated traveling work along the straight route SP2 is started. When the automated traveling work is started, the operator lowers the working machine 12 to bring the working machine 12 into the workable state. The operation described above is repeated, and the working vehicle 1 conducts work while performing automated traveling along a plurality of straight routes SP that has been configured in a field or the like.

As described above, the sensor 16 included in the working vehicle 1 includes the obstacle sensor. When the obstacle sensor has detected an obstacle in a case where automated traveling work or automated turning traveling is being performed, the control device 10 included in the working vehicle 1 automatically decelerates and stops the working vehicle 1. This can improve the safety of the working vehicle 1 that performs automated traveling. In a case where the obstacle sensor has detected an obstacle, the broadcast unit 17 may broadcast the detection of the obstacle instead of or in addition to the automatic stop.

In addition, it is preferable that end points EP that determine the work section WS can be changed when the working vehicle 1 is performing automated traveling along the straight route SP. For example, in a case where the working vehicle 1 is in a state of performing automated traveling along the straight route SP, when the operator has issued an instruction to update an end point by using the operation device 2, an end point closer to the position of the working vehicle 1 at a point in time when the updating instruction has been issued may be updated. Note that the instruction to update the end point EP may be issued by using an existing lever or switch, or may be issued by using a newly provided operation member such as a switch. For example, the instruction to update the end point EP may be issued by pressing the first operation switch 25a twice.

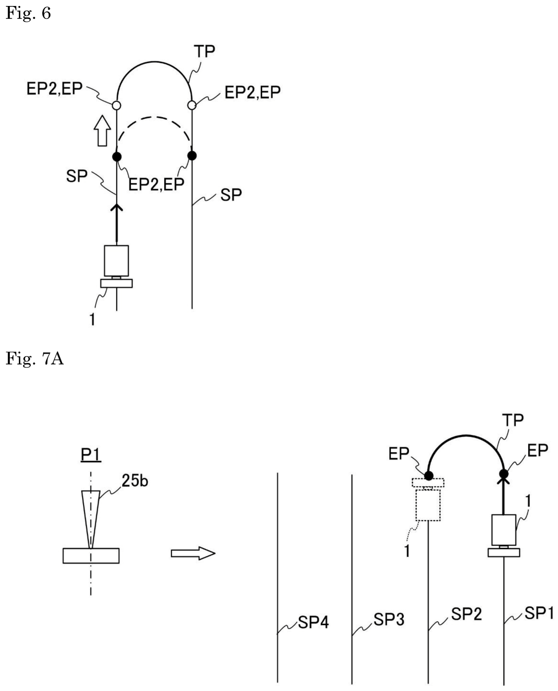

Fig. 6 is a diagram for explaining updating of the end point EP that determines the work section WS. In Fig. 6, it is assumed that the working vehicle 1 has issued an instruction to update an end point in a position close to an end point EP2 from among two end points EP1 and EP2 illustrated in Fig. 5. In addition, in Fig. 6, an end point EP2 of a black circle is an end point before updating, and an end point EP2 of a white circle is an end point after updating.

In Fig. 6, a case is assumed where a position where the working vehicle 1 is further advanced beyond the currently configured end point EP2 (the end point of the black circle) is desired to be configured as the end point EP2. Such a situation occurs, for example, in a case where it is desired to conduct work using the working machine 12 up to a position beyond the position of the currently configured end point EP2. For example, in a case where there is no turning instruction at the currently configured end point EP2, the working vehicle 1 proceeds beyond the end point EP2. The operator stops the working vehicle 1 in the position of an end point to be updated, and issues an instruction to update an end point. As a result, the end point EP2 is updated not only for a straight route SP along which the working vehicle 1 is currently traveling but also for another straight route SP. The end point EP on the other straight route SP is configured, for example, in a position of an intersection with a virtual line that passes through the updated end point EP2 on the straight route SP along which the working vehicle 1 is currently traveling and is orthogonal to the straight route SP.

### [3-2. Turning route]

Here, the turning route TP along which the working vehicle 1 performs automated turning traveling will be described. As described above, the turning route TP is generated by the route generation unit 103. The route generation unit 103 generates the turning route TP on the basis of the configuration state of the second operation switch 25b (see Fig. 2) of the operation device 2. Specifically, the second operation switch 25b is a switch that designates the next straight route SP to be reached as a result of turning traveling. In the present embodiment, the second operation switch 25b can be switched to any of the three positions. A destination of the working vehicle 1 changes depending on which of the three positions has been selected, and therefore a turning route TP to be generated also differs.

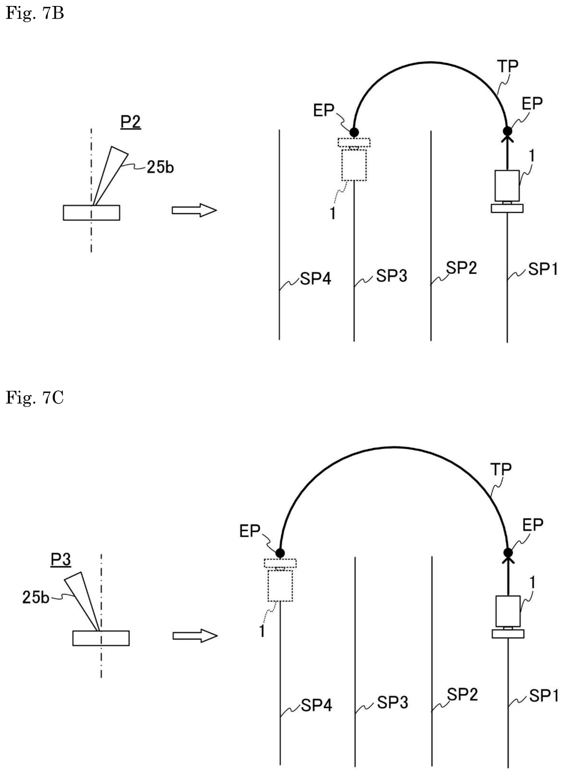

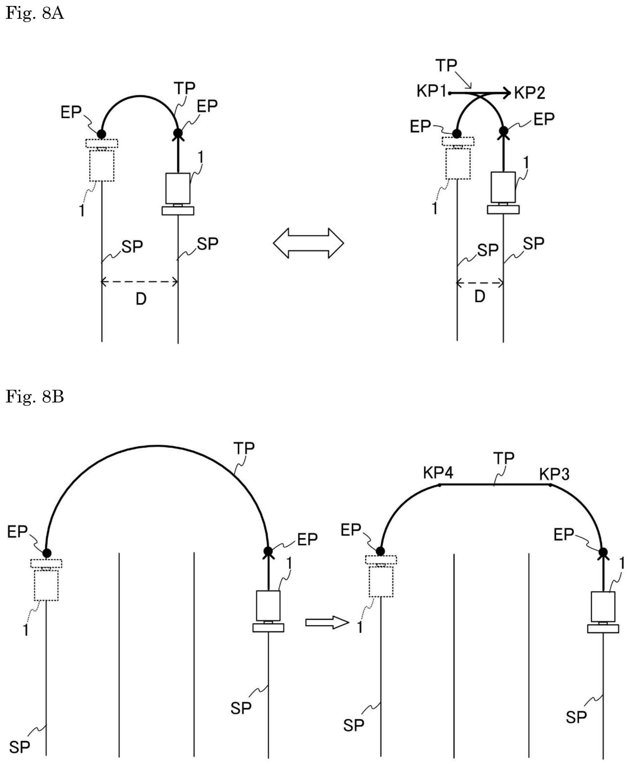

Figs. 7A, 7B, and 7C are schematic diagrams illustrating a relationship between an operation position of the second operation switch 25b and the turning route TP. In Figs. 7A, 7B, and 7C, reference sign EP in the drawings denotes an end point on one side of the work section WS. The same is applied to Figs. 8A and 8B described later.

In Fig. 7A, the second operation switch 25b is located in a first position P1, which is the middle of the three positions. In a case where the second operation switch 25b is located in the first position P1, the route generation unit 103 recognizes that a destination of automated turning traveling has been configured to be the straight route SP2 adjacent to the straight route SP1 along which the vehicle is currently traveling. The route generation unit 103 generates the turning route TP according to the recognition above.

In Fig. 7B, the second operation switch 25b is located in a second position P2 where the second operation switch 25b has been tilted to one side from the first position P1. In a case where the second operation switch 25b is located in the second position P2, the route generation unit 103 recognizes that a destination of automated turning traveling has been configured to be a straight route SP3, which is second nearest the straight route SP1 along which the vehicle is currently traveling. The route generation unit 103 generates the turning route TP according to the recognition above.

In Fig. 7C, the second operation switch 25b is located in a third position P3 where the second operation switch 25b has been tilted to another side from the first position P1. In a case where the second operation switch 25b is located in the third position P3, the route generation unit 103 recognizes that a destination of automated turning traveling has been configured to be a straight route SP4, which is third nearest the straight route SP1 along which the vehicle is currently traveling. The route generation unit 103 generates the turning route TP according to the recognition above.

From the description above of the second operation switch 25b, it can be said that the second operation switch 25b is a switch that determines the number of straight routes SP to be skipped without being configured to be a destination at the time of turning traveling from among a plurality of straight routes SP arranged side by side. Under such interpretation, in a case where the second operation switch 25b has been configured to be located in the first position P1, it can be said that the number of skips has been configured to be zero. In a case where the second operation switch 25b has been configured to be located in the second position P2, it can be said that the number of skips has been configured to be "1". Furthermore, in a case where the second operation switch 25b has been configured to be located in the third position P3, it can be said that the number of skips has been configured to be "2".

Note that a relationship between the selected positions (P1 to P3) of the second operation switch 25b and the number of skips, as illustrated in Figs. 7A, 7B, and 7C, is merely an example, and the relationship therebetween may be appropriately changed. In addition, the configured number of skips is not limited to three, and may be two or four or more.

Meanwhile, it is preferable that a pattern (a turning pattern) of turning traveling for a transition to the next straight route SP differ according to the configured number of skips or the like. In other words, one pattern of the turning route TP does not necessarily need to be provided, and it is preferable that plural types of patterns be provided in a selectable manner. It is also preferable that the pattern of the turning route TP be determined in consideration of not only the number of skips but also an interval between the straight routes SP, the width of the working machine 12, or the like. In the present embodiment, the pattern of the turning route TP is automatically determined on the basis of a configured value of the number of skips, the width of the working machine 12, or the like.

Fig. 8A is a diagram for explaining the pattern of the turning route TP. Note that, in Fig. 8A, a case is assumed where the number of skips is zero. In a case where the number of skips is zero, an interval D between straight routes SP between which the working vehicle 1 moves decreases. Therefore, if the working vehicle 1 performs turning traveling in an arc-shaped turning pattern, as illustrated in a left side diagram of Fig. 8A, there is a possibility that a turning destination deviates from a target straight route SP. Therefore, it is preferable that, as the turning route TP, for example, a route (a fishtail turn route) along which what is called a fishtail turn is performed, as illustrated in a right side diagram of Fig. 8A, can be selected.

An operation performed on the operation device 2 by the operator at the time of automated turning traveling along the fishtail turn route illustrated in Fig. 8A is as follows. Here, it is assumed that the operator has already issued an instruction to turn in the leftward direction at an end point EP (a turning start position) that has been configured on a straight route SP along which automated traveling work is being conducted. The operator tilts the first operation lever 24a in the forward movement direction F1. As a result, the working vehicle 1 travels to point KP1 while turning left, and temporarily stops. When the working vehicle 1 has stopped at point KP1, the operator tilts the first operation lever 24a in the backward movement direction B1. As a result, the working vehicle 1 moves backward to point KP2, and temporarily stops. When the working vehicle 1 has stopped at point KP2, the operator tilts the first operation lever 24a in the forward movement direction F1. As a result, the working vehicle 1 moves forward while turning left from point KP2, and reaches an end point EP (an automated traveling work start position) that has been configured on the next straight route SP. Note that automated steering is performed, and therefore the operator does not need to issue an instruction relating to the turning direction.

Fig. 8B is another diagram for explaining the pattern of the turning route TP. Note that, in Fig. 8B, a case is assumed where the number of skips is "2". In a case where the number of skips has increased, if turning is performed in an arc-shaped turning pattern, as illustrated in a left side portion of Fig. 8B, a width required for turning increases in a direction parallel to the straight route SP (the forward/backward direction). As a result, a range in which work using the working machine 12 can be conducted decreases, and there is a possibility that work efficiency is reduced. Therefore, it is preferable that, as the turning route TP, for example, a route (a flat turn route) including a straight traveling portion that extends in a direction orthogonal to the straight route SP (the leftward/rightward direction), as illustrated in a right side diagram of Fig. 8B, can be selected. In a case where turning traveling along the flat turn route is performed, the working vehicle 1 proceeds to point KP3 while turning left, and travels straight from point KP3 to point KP4. Then, the working vehicle 1 moves forward while turning left from point KP4, and reaches an end point EP (an automated traveling work start position) that has been configured on the next straight route SP. In a case where a flat turn is performed, it is sufficient if the operator performs an operation to tilt the first operation lever 24a in the forward movement direction F1. In addition, automated steering is performed, and therefore the operator does not need to issue an instruction relating to the turning direction.

### [3-3. Specific example of automated traveling method]

Next, a specific example of an automated traveling method of the working vehicle 1 that is performed by the automated traveling system 100 of the present embodiment will be described.

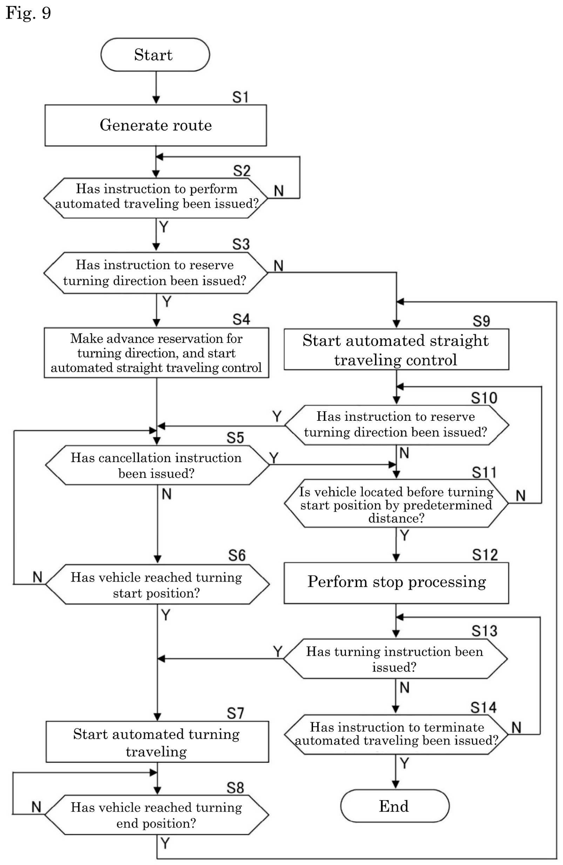

Fig. 9 is a flowchart illustrating a flow of the automated traveling method according to the embodiment of the present invention. In the present embodiment, the automated traveling method of the working vehicle 1 is achieved by causing a computer (the control device 10) to perform arithmetic processing according to a program. Furthermore, in the present embodiment, the processing illustrated in Fig. 9 is performed in a case where the working vehicle 1 and the operation device 2 are in a state communicable with each other. In addition, it is sufficient if the working machine 12 is appropriately changed manually or automatically between the workable state and the unworkable state, as described above, and in the description of Fig. 9, a description relating to the working machine 12 is omitted in principle.

In Step S1, the control device 10 (specifically, the route generation unit 103) generates a plurality of traveling routes along which the working vehicle 1 is caused to perform automated traveling. Stated another way, the automated traveling method of the present embodiment includes generating a plurality of traveling routes along which the working vehicle 1 is caused to perform automated traveling. Specifically, the plurality of traveling routes is straight routes SP (see Fig. 4 or the like), and is routes for work (work routes) along which work using the working machine 12 is conducted. The plurality of straight routes SP is generated by performing an operation to register points A and B as described above. The control device 10 also configures an end point EP that determines the work section WS for each of the generated straight routes SP. As described above, the end point EP is used as the turning start position where turning is started toward the next straight route SP, or the like. Stated another way, the control device 10 configures, on a traveling route, the turning start position where turning is started toward the next traveling route. The automated traveling method includes configuring, on the traveling route, the turning start position where turning is started toward the next traveling route. When a process of generating the traveling route has been completed, the processing proceeds to Step S2 that follows.

In Step S2, the control device 10 (specifically, the reception unit 102) monitors whether an instruction to perform automated traveling has been issued from the operator. In the present embodiment, the instruction to perform automated traveling is issued by the operator pressing the first operation switch 25a of the operation device 2 once, as described above. When the operator has pressed the first operation switch 25a once, the control device 10 determines that the instruction to perform automated traveling has been issued from the operator. When the control device 10 has determined that the instruction to perform automated traveling has been issued (Yes in Step S2), the processing proceeds to Step S3 that follows. When the control device 10 has determined that the instruction to perform automated traveling has not been issued (No in Step S2), the process of Step S2 is repeatedly performed.

After obtaining the plurality of straight routes SP along which automated traveling work is conducted, the operator moves the working vehicle 1 to one position of the two end points EP1 and EP2 (see Fig. 5 or the like) that have been configured on a straight route SP along which work is first conducted, and issues an instruction to perform automated traveling. A movement of the working vehicle 1 at this time may be manual traveling, or may be automated traveling (as a specific example, automated turning traveling).

In Step S3, the control device 10 (specifically, the reception unit 102) determines whether an instruction to reserve a turning direction in the turning start position has been issued from the operator. Note that the turning start position is an end point EP on a side opposite to an end point EP serving as a start position of automated traveling work along the straight route SP.

Specifically, the control device 10 determines whether an instruction to reserve the turning direction has been issued in addition to the instruction to perform automated traveling in Step S2. In the present embodiment, the instruction to reserve the turning direction is issued by using the first operation lever 24a of the operation device 2. When the operator has pressed the first operation switch 25a once, which is an instruction to perform automated traveling, while tilting the first operation lever 24a in a desired direction of turning, the control device 10 determines that an instruction to reserve the turning direction in the turning start position has been issued. When the control device 10 has determined that the instruction to reserve the turning direction has been issued (Yes in Step S3), the processing proceeds to Step S4 that follows. When the control device 10 has determined that the instruction to reserve the turning direction has not been issued (No in Step S3), the processing proceeds to Step S9.

In Step S4, the control device 10 (specifically, the reception unit 102) receives the turning direction in the turning start position, before automated traveling is started. Stated another way, the control device 10 receives an advance reservation for the turning direction in the turning start position that has been made by using the operation device 2. The automated traveling method includes receiving an advance reservation for the turning direction in the turning start position. For example, in a case where the operator has pressed the first operation switch 25a once while tilting the first operation lever 24a in the right-turning direction R1, the control device 10 makes an advance reservation for right turning in the turning start position. The received content of advance reservation is stored in the storage unit 101. The content stored in the storage unit 101 may include not only the turning direction but also the turning route TP that has been generated by the route generation unit 103 according to the determination of the turning direction.

In the automated traveling method of the present embodiment, as a preferable mode, when the advance reservation has been received, the working vehicle 1 is caused to broadcast the received turning direction to the outside. Specifically, the broadcast is performed by using the broadcast unit 17 included in the working vehicle 1 under the control of the broadcast control unit 107. As a specific example, the sound "a reservation for right turning has been received" is output by using a speaker (an example of the broadcast unit 17). As another example, a turn signal that corresponds to the received turning direction is turned on or blinks from among turn signals (an example of the broadcast unit 17) to be turned on at the time of turning. A period during which the turn signal is turned on or blinks may be a short period of a certain period after the advance reservation has been received, or may be a period after the advance reservation has been received and before turning has been completed in the turning start position. The reception of the advance reservation for the turning direction is broadcast to the outside of the working vehicle 1, and therefore the operator can confirm a turning direction reserved by the operator himself or herself, and an error in configuring the turning direction can be prevented from occurring.

Furthermore, in Step S4, the control device 10 (specifically, the traveling mode control unit 104) switches the traveling mode of the working vehicle 1 to the automated traveling mode, and starts automated straight traveling control. As a result, the control device 10 (specifically, the traveling control unit 105) starts automated steering control in such a way that the working vehicle 1 travels along the straight route SP. During the automated straight traveling control, the first operation lever 24a of the operation device 2 is tilted in the forward movement direction F1 (see Fig. 2) by the operator, and therefore the working vehicle 1 performs automated straight traveling. The traveling speed of the working vehicle 1 is adjusted according to an amount of tilting the first operation lever 24a in the forward movement direction F1. Note that in a case where the operation device 2 has the speed fixing instruction function described above, the operator can cause the working vehicle 1 to perform automated traveling while releasing the hand from the first operation lever 24a, after the speed has been adjusted. Furthermore, as described above, the working machine 12 is in the workable state during the automated straight traveling control, and automated straight traveling is performed so that automated traveling work using the working machine 12 is conducted. When the advance reservation for the turning direction has been received and the automated straight traveling control has been started, the processing proceeds to Step S5 that follows.

In Step S5, the control device 10 (specifically, the reception unit 102) determines whether an instruction to cancel the previously received advance reservation for the turning direction has been issued. Stated another way, the automated traveling method of the present embodiment includes receiving cancellation for the turning direction reserved in advance. An instruction to cancel the turning direction may be issued, for example, by using the operation lever 24 or the operation switch 25 included in the operation device 2, but may be issued by using an operation member, such as a switch, that is separately provided for a cancellation instruction. For example, when the operator has operated a cancellation button, the control device 10 determines that the instruction to cancel the advance reservation for the turning direction has been issued from the operator. When the control device 10 has determined that the cancellation instruction has been issued (Yes in Step S5), the processing proceeds to Step S11. When the control device 10 has determined that the cancellation instruction has not been issued (No in Step S5), the processing proceeds to Step S6 that follows.

In Step S6, the control device 10 (specifically, the traveling control unit 105) determines whether the working vehicle 1 has reached the turning start position (one end point of the work section WS). Whether the working vehicle 1 has reached the turning start position is determined on the basis of positional information obtained from the positioning communication unit 14 (see Fig. 3). In a case where it has been determined that the working vehicle 1 has reached the turning start position (Yes in Step S6), the processing proceeds to Step S7 that follows. In a case where it has been determined that the working vehicle 1 has not reached the turning start position (No in Step S6), the processing returns to Step S5.

In Step S7, the control device 10 (specifically, the traveling control unit 105) causes the working vehicle 1 to start automated turning traveling in the turning direction reserved in advance. Stated another way, when the working vehicle 1 that performs automated traveling along the traveling route has reached the turning start position, the control device 10 causes the working vehicle 1 to automatically turn in the turning direction reserved in advance. The automated traveling method includes causing the working vehicle 1 to automatically turn in the turning direction reserved in advance, when the working vehicle 1 that performs automated traveling along the traveling route has reached the turning start position. By employing such a configuration, the working vehicle 1 can be caused to automatically turn without temporarily stopping the working vehicle 1 in the turning start position, and this can improve the work efficiency. Automated turning traveling is performed along the turning route TP generated by the route generation unit 103. In automated turning traveling, steering is automatically performed, and therefore the operator operates the first operation lever 24a of the operation device 2 to adjust the traveling speed of the working vehicle 1. When automated turning traveling has been started, the processing proceeds to Step S8 that follows.

In a case where the working vehicle 1 is caused to perform automated turning traveling, it is preferable that a turn signal be turned on or blink such that the turning direction can be recognized. It is also preferable that the turning on or blinking of the turn signal be started at a timing before reaching the turning start position. The timing before reaching the turning start position may be determined on the basis of, for example, a distance or time. The distance can be acquired by using positional information obtained from the positioning communication unit 14. In addition, the time can be acquired by using the positional information described above and the current speed of the working vehicle 1. As a specific example, the turning on or blinking of the turn signal may be started, for example, 5 seconds or 3 seconds before reaching the turning start position.

In Step S8, the control device 10 (specifically, the traveling control unit 105) determines whether the working vehicle 1 has reached a turning end position. The turning end position is an end point EP of a work section WS configured on a straight route SP along which the work is conducted next, and is a work start position on the straight route SP along which the work is conducted next. Whether the working vehicle 1 has reached the turning end position is determined on the basis of positional information obtained from the positioning communication unit 14 (see Fig. 3). In a case where it has been determined that the working vehicle 1 has reached the turning end position (Yes in Step S8), the processing proceeds to Step S9, and automated straight traveling control along the next straight route SP is started. In a case where it has been determined that the working vehicle 1 has not reached the turning end position (No in Step S8), the process of Step S8 is repeatedly performed.

In Step S9, the control device 10 (specifically, the traveling control unit 105) starts automated straight traveling control in a state where the turning direction in the turning start position has not been reserved. The content of automated straight traveling control is as described above, and thus the description thereof is omitted here. When automated straight traveling control has been started, the processing proceeds to Step S10 that follows.

In Step S10, the control device 10 (specifically, the reception unit 102) determines whether an instruction to reserve the turning direction in the turning start position has been issued from the operator. Stated another way, in the present embodiment, the operator can make an advance reservation for the turning direction not only when the automated straight traveling function is activated but also after the automated straight traveling control has been started. The instruction to reserve the turning direction may be the same as the instruction to reserve the turning direction that is issued in addition to the instruction to perform automated traveling. Stated another way, when the operator has pressed the first operation switch 25a once while tilting the first operation lever 24a in a desired direction of turning, the control device 10 may determine that an instruction to reserve the turning direction in the turning start position has been issued. Note that a method of issuing an instruction to reserve the turning direction may be different between Step S10 and Step S2, and the instruction to reserve the turning direction in Step S10 may be issued by tilting the first operation lever 24a (holding the first operation lever 24a tilted) in a desired direction of turning for a predetermined period or more. When the control device 10 has determined that the instruction to reserve the turning direction has been issued (Yes in Step S10), the processing proceeds to Step S5 described above. When the control device 10 has determined that the instruction to reserve the turning direction has not been issued (No in Step S10), the processing proceeds to Step S11 that follows.

In Step S11, the control device 10 (specifically, the traveling control unit 105) determines whether the working vehicle 1 has reached a position before the turning start position by a predetermined distance. Whether the working vehicle 1 has reached the position is determined on the basis of positional information obtained from the positioning communication unit 14 (see Fig. 3). Note that the position before the turning start position by the predetermined distance is a position at which the working vehicle 1 can stop in the turning start position if the working vehicle 1 starts deceleration there, and the position may be an empirically determined position. Furthermore, the position before the turning start position by the predetermined distance may be changed according to the speed of the working vehicle 1. In a case where it has been determined that the working vehicle 1 has reached the position before the turning start position by the predetermined distance (Yes in Step S11), the processing proceeds to Step S12 that follows. In a case where it has been determined that the working vehicle 1 has not reached the position before the turning start position by the predetermined distance (No in Step S11), the processing returns to Step S10 described above.

In Step S12, the control device 10 (specifically, the traveling control unit 105) performs stop processing such that the working vehicle 1 stops in the turning start position. The stop processing may be, for example, a configuration of automatically reducing the speed stepwise, braking processing, or the like. Furthermore, it is preferable that the stop processing include processing of prompting the operator to issue a turning instruction at a point in time when the working vehicle 1 has stopped in the turning start position. By employing such a configuration, in a case where the operator has forgotten an instruction relating to the turning direction, the operator can quickly understand the reason why the working vehicle 1 has stopped, and can quickly issue the instruction to the working vehicle 1. Stated another way, the efficiency of work using the working vehicle 1 can be improved. The processing of prompting the turning instruction may be, for example, a configuration in which the broadcast unit 17 included in the working vehicle 1 outputs buzzer sound or sound guidance, a configuration in which a light-emitting unit such as a light is caused to emit light, or the like. In addition, the processing of prompting the turning instruction may be a configuration in which a broadcast unit (for example, the display 27 or the like) included in the operation device 2 is caused to display a message prompting the turning instruction. When the stop processing has been completed, the processing proceeds to Step S13 that follows.

In Step S13, the control device 10 (specifically, the reception unit 102) determines whether the turning instruction has been issued from the operator. Note that the turning instruction may be the same as or different from the instruction to reserve the turning direction in Step S2 or Step S10. However, the turning instruction needs to include an instruction relating to the turning direction. In a case where it has been determined that the turning instruction has been issued (Yes in Step S13), the processing proceeds to Step S7 described above, and automated turning traveling is started. In a case where it has been determined that the turning instruction has not been issued (No in Step S13), the processing proceeds to Step S14 that follows.

In Step S14, the control device 10 (specifically, the reception unit 102) determines whether an instruction to terminate automated traveling has been issued from the operator. In the present embodiment, the instruction to terminate automated traveling is achieved by the operator operating (as an example, pressing once) the first operation switch 25a of the operation device 2. In a case where it has been determined that the instruction to terminate automated traveling has been issued (Yes in Step S14), the automated traveling method illustrated in Fig. 9 is terminated. After the automated traveling method has been terminated, the operator causes the working vehicle 1 to manually travel. In a case where it has been determined that the instruction to terminate automated traveling has not been issued (No in Step S14), the processing returns to Step S13, and the processes of Step S13 and steps that follow are performed.

### [3-4. Supplementary description]

Hereinafter, a supplementary description relating to the automated traveling method described above will be described.

In the description above, an advance reservation for the turning direction in the turning start position can be received both at a timing when the working vehicle 1 transitions to a mode of performing automated traveling along a traveling route (as a specific example, the straight route SP) and while the working vehicle 1 is performing automated traveling along the traveling route. However, the advance reservation may be able to be made only at one of these two timings. Stated another way, the advance reservation may be able to be received at least either at the timing when the working vehicle 1 transitions to the mode of performing automated traveling along the traveling route or while the working vehicle 1 is performing automated traveling along the traveling route.

In the present embodiment, in a case where the advance reservation has been received, the working vehicle 1 is caused to automatically turn without stopping in the turning start position. Therefore, work using the working vehicle 1 can be efficiently conducted. On the other hand, in a case where the advance reservation has not been received, the working vehicle 1 is stopped in the turning start position. Specifically, the working vehicle 1 is automatically stopped in the turning start position. Therefore, safety can be ensured.

A supplementary description will be further provided with reference to Fig. 5 referred to in the description above. Here, it is assumed that the turning direction has been reserved in advance at the start of automated traveling work along the first straight route SP1. When the working vehicle 1 that has started automated traveling from a start position (the end point EP1) of the automated traveling work along the first straight route SP1 has reached an automated turning start position (the end point EP2), the working vehicle 1 starts turning in the turning direction reserved in advance (a rightward direction) without stopping, and performs automated turning traveling along the turning route TP. When the working vehicle 1 has reached a start position (the end point EP2) of automated traveling work that has been configured on the next straight route SP2, the working vehicle 1 terminates automated turning traveling, and starts automated traveling work along the straight route SP2. At the time of the automated traveling work, an advance reservation for the turning direction in the turning start position (the end point EP1) has not been made, and therefore the working vehicle 1 automatically stops when reaching the turning start position. In a case where the operator does not desire to automatically stop the working vehicle 1, the operator operates the operation device 2 to make an advance reservation for the turning direction (a leftward direction) while the working vehicle 1 is conducting the automated traveling work along the straight route SP2.

Stated another way, in the automated traveling method of the present embodiment, when the advance reservation has been received, the turning direction in the turning start position is configured only for one traveling route (as a specific example, the straight route SP) serving as a target of automated traveling at the point in time. Note that, in the example illustrated in Fig. 5, the working vehicle 1 may automatically stop at a point in time when automated turning traveling from the first straight route SP1 to the next straight route SP2 has been completed (that is, a point in time when the working vehicle 1 has reached the start position of the automated traveling work along the straight route SP2). By employing such a configuration, the operator can be prompted to make an advance reservation for the turning direction. At the time of automatic stop, sound guidance or the like may be performed to prompt an advance reservation.

When the advance reservation has been received, the turning direction in the turning start position may be configured not only for one traveling route (as a specific example, one straight route SP) that is a target of automated traveling at the point in time, but also for traveling routes that are targets of automated traveling the next time and later. In this case, specifically, the turning direction configured for each of the traveling routes by making an advance reservation is reversed every time the traveling route changes. Describing by using the example illustrated in Fig. 5, when the turning direction has been reserved in advance at the start of automated traveling work along the first straight route SP1, the turning directions configured for the respective straight routes SP1 to SP4 are the rightward direction, the leftward direction, the rightward direction, and the leftward direction in order from the first straight route SP1. By employing such a configuration, when the turning direction has been first reserved in advance, the work can be continued without issuing a turning instruction on each of the traveling routes (the straight routes SP), and therefore an operation burden on the operator can be reduced, and the work efficiency can be expected to be improved.

The operator may be able to select whether an advance reservation for the turning direction is configured only for one traveling route (one straight route SP) or can be collectively configured for a plurality of traveling routes. A selection unit, such as a button, that enables such selection to be performed may be provided in the operation device 2, or may be provided in the working vehicle 1.

The updating of the end point EP configured on the straight route SP has been described above, and a relationship between the updating of the end point EP and an advance reservation for the turning direction will be supplementarily described. In a case where it is desired to change an end point EP serving as the turning start position to a position on a front side in the traveling direction of the working vehicle 1 in a state where the advance reservation has been made, it is sufficient if the operator stops the working vehicle 1 in a position to be changed during automated traveling work, and issues an instruction to change the end point EP by using the operation device 2. As a result, the end point EP is changed, and automated turning traveling can be started by issuing an instruction to perform forward traveling by using the operation device 2.

On the other hand, in a case where it is desired to change the end point EP serving as the turning start position to a position on a back side in the traveling direction of the working vehicle 1 in a state where the advance reservation has been made, the operator needs to temporarily cancel the advance reservation by performing the operation described above. This is because if the advance reservation is not canceled, automated turning traveling is started when the working vehicle 1 has reached the end point EP serving as the turning start position, and the end point EP fails to be updated.

In addition, in the present embodiment, in a case where the advance reservation has not been made, the working vehicle 1 automatically stops when reaching the end point EP serving as the turning start position. In this case, similarly, the position of the end point EP can be changed to a position on the back side in the traveling direction by issuing a forward movement instruction after the automatic stop. However, it is inconvenient if the automatic stop is performed in a case where it is desired to change the end point EP to a position on the back side in the traveling direction, and therefore an instruction to temporarily release an automatic stop function may be issued from the operation device 2. In addition, in a case where the advance reservation has been canceled after the advance reservation, it is expected that the end point EP will be updated. Therefore, in a case where the advance reservation has been canceled, the automatic stop may not be performed at the end point EP serving as the turning start position.

In the embodiment described above, in a case where it is desired to change the turning direction after an advance reservation for the turning direction, it is necessary to temporarily cancel the advance reservation and then make an advance reservation for the turning direction again. Instead of such a configuration, a change operation to reverse the turning direction in the turning start position that has been configured in the reception of the advance reservation can be received. By employing such a configuration, the operator can flexibly change the advance reservation for the turning direction according to a work status or the like.

The change operation to reverse the turning direction may be, for example, a configuration in which the first operation lever 24a is operated in a direction opposite to a direction in which the first operation lever 24a has been operated in a previous advance reservation. However, for the purpose of avoiding an erroneous operation, it is preferable that the change operation to reverse the turning direction be a configuration in which the first operation lever 24a is operated (held tilted) in the opposite direction for a certain period or more, a configuration in which the first operation switch 25a is pressed once while the first operation lever 24a is operated in the opposite direction, or another configuration.

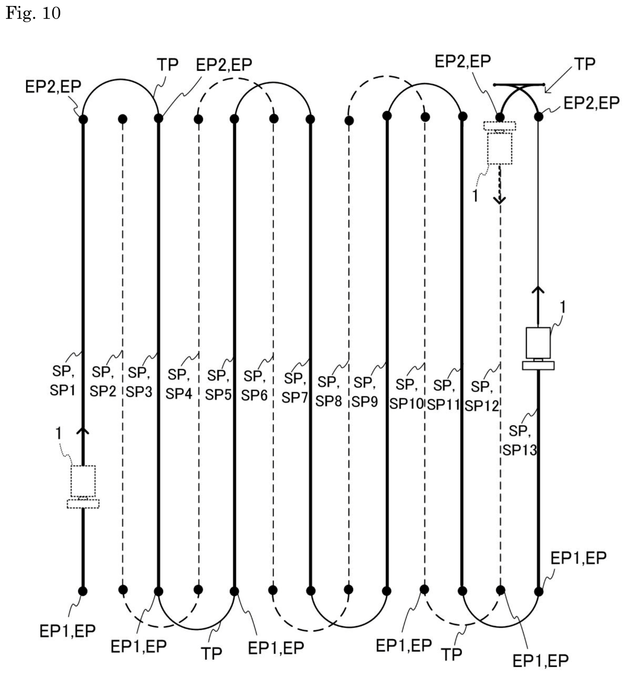

Fig. 10 is a diagram illustrating a specific example of a situation where a change operation is performed to reverse a turning direction configured in an advance reservation. In Fig. 10, a straight route SP along which automated traveling work is first conducted is the leftmost straight route SP1. In Fig. 10, the automated traveling work is started at an end point EP1 on the first straight route SP1, and a turning direction in the turning start position has been reserved in advance at the start of the automated traveling work. In the advance reservation, the turning directions in the turning start positions are collectively configured for the respective straight routes SP.

Furthermore, in Fig. 10, the number of skips configured by using the second operation switch 25b (see Fig. 2) is "1". Therefore, the automated traveling work is conducted along every second straight route from the leftmost straight route SP1. Stated another way, the automated traveling work is conducted along odd-numbered straight routes SP in ascending order of odd numbers from the leftmost straight route SP1.

When the working vehicle 1 that conducts the automated traveling work along the first straight route SP1 has reached the turning start position (an end point EP2), the working vehicle 1 automatically starts turning in the rightward direction, and performs automated turning traveling to reach an automated traveling work start position (an end point EP2) on the straight route SP3 serving as a route along which the work is conducted next. When the working vehicle 1 that conducts the automated traveling work along the straight route SP3 has reached the turning start position (an end point EP1), the working vehicle 1 automatically starts turning in the leftward direction, and performs automated turning traveling to reach an automated traveling work start position (an end point EP1) on a straight route SP5 serving as a route along which the work is conducted next. In the example illustrated in Fig. 10, it is assumed that the working vehicle 1 has repeated such an operation, and has completed the automated traveling work up to a halfway position on the rightmost straight route SP13. Note that in Fig. 10, a straight route SP along which the automated traveling work has been completed is illustrated with a bold line.

The operator considers conducting the automated traveling work along straight routes SP (not-yet-traveling routes) that have been skipped so far from among all of the straight routes SP generated as routes for work, after the automated traveling work is completed up to the end point EP2 on the rightmost straight route SP13. Note that in the example illustrated in Fig. 10, the not-yet-traveling routes are even-numbered straight routes SP. In order to conduct the work along these not-yet-traveling routes, the operator performs a change operation to reverse the turning direction configured in the advance reservation, while the working vehicle 1 is traveling along the straight route SP13. As a result, when the working vehicle 1 has reached the end point EP2 on the straight route SP13, the working vehicle 1 turns not in the rightward direction but in the leftward direction, and performs automated turning traveling to reach an automated traveling work start position (an end point EP2) on a straight route SP12. Then, when the working vehicle 1 that conducts the automated traveling work along the straight route SP12 has reached the turning start position (an end point EP1), the working vehicle 1 automatically starts turning in the rightward direction, and performs automated turning traveling to reach an automated traveling work start position (an end point EP1) on a straight route SP10 serving as a route along which the work is conducted next. When the working vehicle 1 has repeated such an operation and has completed the automated traveling work along the straight route SP2, the automated traveling work can be completed along all of the straight routes SP.

Note that, in the example illustrated in Fig. 10, it is assumed that a first turning route TP in a case where a change operation has been performed to reverse the turning direction configured in the advance reservation has a number of skips of "0" in contrast to a number of skips of "1". This is because if the number of skips remains "1", the vehicle fails to move to a not-yet-traveling route. A change in the number of skips may be achieved by the operator operating the second operation switch 25b, or such a change in the number of skips may be automatically performed according to a program. In a configuration in which the number of skips is automatically changed, the operator may be able to select the number of skips in advance.

### <4. Points to be noted>

Various changes can be made to various technical features disclosed herein without departing from the spirit of the technical creation. In addition, a plurality of embodiments and modifications described herein may be implemented in combination to the extent possible.

### <5. Additional notes>

An exemplary automated traveling method of the present invention is an automated traveling method of a working vehicle, and the automated traveling method may include: generating a plurality of traveling routes along which the working vehicle is caused to perform automated traveling; configuring, on each of the plurality of traveling routes, a turning start position where turning is started toward a next traveling route; receiving an advance reservation for a turning direction in the turning start position; and causing the working vehicle to automatically turn in the turning direction for which the advance reservation has been made, when the working vehicle that performs the automated traveling along each of the plurality of traveling routes has reached the turning start position (a first configuration).

In the automated traveling method having the first configuration, the advance reservation may be receivable at least either at a timing when the working vehicle transitions to a mode of performing the automated traveling along each of the plurality of traveling routes or while the working vehicle is performing the automated traveling along each of the plurality of traveling routes (a second configuration).

In the automated traveling method having the first or second configuration, in a case where the advance reservation has been received, the working vehicle may be caused to automatically turn without stopping in the turning start position (a third configuration).

In the automated traveling method having any of the first to third configurations, in a case where the advance reservation has not been received, the working vehicle may be stopped in the turning start position (a fourth configuration).

In the automated traveling method having any of the first to fourth configurations, when the advance reservation has been received, the working vehicle may be caused to broadcast the turning direction that has been received to the outside (a fifth configuration).

In the automated traveling method having any of the first to fifth configurations, when the advance reservation has been received, the turning direction in the turning start position may be configured not only for one traveling route serving as a target of the automated traveling at a point in time but also for other traveling routes serving as targets of the automated traveling next time and later (a sixth configuration).

In the automated traveling method having the sixth configuration, the turning direction configured for each of the plurality of traveling routes in the advance reservation may be reversed every time a traveling route changes (a seventh configuration).

In the automated traveling method having any of the first to fifth configurations, when the advance reservation has been received, the turning direction in the turning start position may be configured only for one traveling route serving as a target of the automated traveling at a point in time (an eighth configuration).

In the automated traveling method having any of the first to eighth configurations, a change operation may be receivable to reverse the turning direction in the turning start position, the turning direction having been configured by receiving the advance reservation (a ninth configuration).

### LIST OF REFERENCE SIGNS

- 1: Working vehicle
- 2: Operation device
- 10: Control device
- 100: Automated traveling system
- SP: Straight route (traveling route)
- EP, EP1, EP2: Turning start position

## Claims

1. An automated traveling method of a working vehicle, the automated traveling method comprising:
generating a plurality of traveling routes along which the working vehicle is caused to perform automated traveling;
configuring, on each of the plurality of traveling routes, a turning start position where turning is started toward a next traveling route;
receiving an advance reservation for a turning direction in the turning start position; and
causing the working vehicle to automatically turn in the turning direction for which the advance reservation has been made, when the working vehicle that performs the automated traveling along each of the plurality of traveling routes has reached the turning start position.

2. The automated traveling method according to claim 1, wherein the advance reservation is receivable at least either at a timing when the working vehicle transitions to a mode of performing the automated traveling along each of the plurality of traveling routes or while the working vehicle is performing the automated traveling along each of the plurality of traveling routes.

3. The automated traveling method according to claim 1 or 2, wherein in a case where the advance reservation has been received, the working vehicle is caused to automatically turn without stopping in the turning start position.

4. The automated traveling method according to claim 1 or 2, wherein in a case where the advance reservation has not been received, the working vehicle is stopped in the turning start position.

5. The automated traveling method according to claim 1 or 2, wherein when the advance reservation has been received, the working vehicle is caused to broadcast the turning direction that has been received to an outside.

6. The automated traveling method according to claim 1, wherein when the advance reservation has been received, the turning direction in the turning start position is configured not only for one traveling route serving as a target of the automated traveling at a point in time but also for other traveling routes serving as targets of the automated traveling next time and later.

7. The automated traveling method according to claim 6, wherein the turning direction configured for each of the plurality of traveling routes in the advance reservation is reversed every time a traveling route changes.

8. The automated traveling method according to claim 1, wherein when the advance reservation has been received, the turning direction in the turning start position is configured only for one traveling route serving as a target of the automated traveling at a point in time.

9. The automated traveling method according to any one of claims 6 to 8, wherein a change operation is receivable to reverse the turning direction in the turning start position, the turning direction having been configured by receiving the advance reservation.

10. An automated traveling system comprising:
a working vehicle;
an operation device that is provided to enable the working vehicle to be configured with respect to automated traveling; and
a control device that controls the automated traveling of the working vehicle in response to an instruction from the operation device, wherein
the control device performs:
generating a plurality of traveling routes along which the working vehicle is caused to perform the automated traveling;
configuring, on each of the plurality of traveling routes, a turning start position where turning is started toward a next traveling route;
receiving an advance reservation for a turning direction in the turning start position, the advance reservation having been made by using the operation device; and
causing the working vehicle to automatically turn in the turning direction for which the advance reservation has been made, when the working vehicle that performs the automated traveling along each of the plurality of traveling routes has reached the turning start position.

11. A program that causes a computer to perform an automated traveling method of a working vehicle, wherein
the program causes the computer to perform:
generating a plurality of traveling routes along which the working vehicle is caused to perform automated traveling;
configuring, on each of the plurality of traveling routes, a turning start position where turning is started toward a next traveling route;
receiving an advance reservation for a turning direction in the turning start position; and
causing the working vehicle to automatically turn in the turning direction for which the advance reservation has been made, when the working vehicle that performs the automated traveling along each of the plurality of traveling routes has reached the turning start position.
